**Europäisches Patentamt**

**European Patent Office**

**Office européen des brevets**

(11) Veröffentlichungsnummer: **0 009 113**
**A2**

(12) # EUROPÄISCHE PATENTANMELDUNG

(21) Anmeldenummer: **79102915.0**

(22) Anmeldetag: **10.08.79**

(51) Int. Cl.³: **G 06 F 15/40**

(30) Priorität: **20.09.78 DE 2840909**

(43) Veröffentlichungstag der Anmeldung: **02.04.80**
**Patentblatt 80/7**

(84) Benannte Vertragsstaaten: **BE CH FR GB IT NL SE**

(71) Anmelder: **SIEMENS AKTIENGESELLSCHAFT Berlin und München, Postfach 22 02 61, D-8000 München 22 (DE)**

(72) Erfinder: **Arndt, Gerhard, Dipl.-Ing., Carl-Weinberger-Strasse 17, D-8150 Holzkirchen (DE)**
Erfinder: **Sammer, Werner, Dipl.-Math, Papperitzstrasse 11, D-8000 München 71 (DE)**
Erfinder: **Schmitter, Ernst, Dipl.-Math., Zwiedineckstrasse 40, D-8000 München 50 (DE)**

(54) **Datenbank-System für im Echtzeitbetrieb arbeitende Datenverarbeitungsanlage.**

(57) Datenbanken sind in aller Regel verkehrsmäßige Engpässe in im Echtzeitbetrieb arbeitenden Datenverarbeitungsanlagen, zu denen jeweils mehrere Benutzer gleichzeitig und gleichberechtigt Zugang haben. Der Zugriff zu den Datensätzen muß in aller Regel in mehreren Suchschritten erfolgen und benötigt eine dementsprechende Zeit. Dadurch wird häufig die geforderte Leistungsfähigkeit einer Datenbank – ausgedrückt in «Anzahl der Zugriffe pro Zeiteinheit» – nicht erreicht. Bekannte Systeme, in denen das genannte Problem durch komplexe Hardwareanordnungen behandelt wird, sind in ihrer Wirkung nicht optimal und benötigen überdies einen hohen Organisationsaufwand.

Der Erfindung liegt die Aufgabe zugrunde, die genannten Nachteile bei bekannten Datenbank-Systemen zu vermeiden, wobei trotz geringeren Aufwandes an Software untragbare Zugriffswartezeiten vermieden werden.

Die Aufgabe wird durch ein Datenbank-System für im Echtzeitbetrieb arbeitende Datenverarbeitungsanlagen gelöst, das dadurch gekennzeichnet ist, daß mehrere, vorzugsweise mit Mikroprozessoren aufgebaute Datenbankrechner vorgesehen sind, die über ein Kommunikationssystem gleichberechtigt von Bedienungsstationen mittels diesen individuell zugeordneten Zugriffssteuerungen belegbar sind, und daß jedem Datenbankrechner ein eigener Funktionsbereich des Datenbank-Systems zugeordnet ist, so daß mehrere Zugriffsanforderungen für unterschiedliche Funktionsbereiche zeitparallel abwickelbar sind.

SIEMENS AKTIENGESELLSCHAFT          Unser Zeichen
Berlin und München                  VPA 78 P 7 1 2 8

Datenbank-System für im Echtzeitbetrieb arbeitende
Datenverarbeitungsanlagen

Datenbanken sind in aller Regel verkehrsmäßige Engpässe in im Echtzeitbetrieb arbeitenden Datenverarbeitungsanlagen, zu denen jeweils mehrere Benutzer gleichzeitig und gleichberechtigt Zugang haben. Solche Datenverarbeitungsanlagen sind beispielsweise Informationssysteme, Dispositionssysteme, bestimmte Teile von
rechnergesteuerten Fernsprechvermittlungssystemen u.
a.m.. Der Zugriff zu den Datensätzen muß in aller
Regel in mehreren Suchschritten erfolgen und benötigt
eine dementsprechende Zeit. Dadurch wird häufig die
geforderte Leistungsfähigkeit einer Datenbank -ausgedrückt in "Anzahl der Zugriffe pro Zeiteinheit"- nicht
erreicht. Bekannte Systeme, in denen das genannte Problem durch komplexe Hardwareanordnungen behandelt wird,
sind in ihrer Wirkung nicht optimal und benötigen überdies einen hohen Organisationsaufwand.

Pap1The / 20.9.1978

VPA 78 P 7 1 2 8

In solchen bekannten Systemen wird ein erforderlicher mehrstufiger Suchvorgang über Tabellen mit verschiedenen Zugriffsverfahren, beispielsweise mittels Indexlisten oder sog. invertierter Listen durchgeführt. Diese Listen sowie die eigentlichen Daten werden von einem Prozessor verwaltet. Um nun nicht die Bearbeitung aller Listen und den eigentlichen Datensatzzugriff eines Benutzers abwarten zu müssen, bevor ein weiterer Benutzer in den Suchvorgang eintreten kann, sind bei neueren bekannten Datenbanken besondere Systemkomponenten vorgesehen. Man bedient sich beispielsweise zweier unterschiedlicher Befehlszähler, die durch die sog. Multi-Programmfähigkeit des Betriebssystems bedingt sind und nützt die sich daraus ergebenden Vorteile aus, indem man den Komplex "Datenbank" in ein Suchprogramm und in das eigentliche Datenbankprogramm unterteilt. Damit werden jedoch nachteiligerweise die Funktionen des Datenbanksystems, nämlich die Verwaltung der Organisationsdaten und die Verwaltung der Benutzerdaten getrennt. Die diesen Zwecken zugeordneten Programme müssen durch einen einzigen Prozessor abgewickelt werden. Die zunächst dadurch gegebene bessere Ausnutzung des Prozessors bedingt jedoch ein kompliziertes zusätzliches Steuerprogramm zur Bewältigung der zusätzlich benötigten Verwaltung.

Der Erfindung liegt die Aufgabe zugrunde, die genannten Nachteile bei bekannten Datenbanksystemen zu vermeiden, wobei trotz geringeren Aufwandes an Software untragbare Zugriffswartezeiten vermieden werden.

Die Aufgabe wird durch ein Datenbanksystem für im Echtzeitbetrieb arbeitende Datenverarbeitungsanlagen gelöst, das dadurch gekennzeichnet ist, daß mehrere, vorzugsweise mit Mikroprozessoren aufgebaute Datenbankrechner vorgesehen sind, die über ein Kommunikationssystem gleichberechtigt von Bedienungsstationen mittels diesen individuell zugeordneten Zugriffssteuerungen belegbar sind und daß jedem Datenbankrechner ein eigener Funktionsbereich des Datenbanksystems zugeordnet ist, so daß mehrere Zugriffsanföderungen für unterschiedliche Funktionsbereiche zeitparallel abwickelbar sind.

Die Erfindung bietet den Vorteil, daß durch die hardwaremäßige Unabhängigkeit der einzelnen Funktonsbereiche verschiedene Datenbankfunktionen für mehrere Benutzer gleichzeitig bearbeitet werden können.

Eine Weiterbildung der Erfindung ist dadurch gekennzeichnet, daß mehrere Datenbanken vorgesehen sind, die ihrerseits aus mehreren in jeweils einer Gruppe zusammengefaßten Datenbankrechnern bestehen, die über das Kommunikationssystem gleichberechtigt von Bedienungsstationen mittels diesen individuell zugeordneten Zugriffssteuerungen belegbar sind, daß den Datenbankrechnern der Datenbanken jeweils eigene Funktionsbereiche des Datenbanksystems zugeordnet sind und daß zumindest ein allen Datenbankrechnern die erforderliche Wegesuche für zeitlich zusammenfallende Zugriffsanforderungen ausführender zentraler Datenbankrechner übergeordnet ist.

Die Weiterbildung der Erfindung bietet den Vorteil, daß auch bei einer Mehrzahl von für den gleichen Funktionsbereich des Datenbanksystems vorliegenden Zugriffsanforderungen keine einen Echtzeitbetrieb der betreffenden Datenverarbeitungsanlage störenden Wartezeiten auftreten können. Außerdem ist es vorteilhaft, daß ein beim Stand der Technik für die Lösung dieses Problems, nämlich die Koordinierung des durch mehrere gleichzeitig auftretende Zugriffsanforderungen für einen bestimmten Funktionsbereich entstehenden Simultanbetriebs, nötiger hoher Organisationsaufwand vermieden ist.

Im folgenden wird die Erfindung an Hand mehrerer Figuren erläutert.

Fig. 1 zeigt ein Ausführungsbeispiel für das erfindungsgemäße Datenbank-System mit einem Kommunikationssystem KS, mehreren Datenbankrechnern DB1... DBn, mehreren Bedienungsstationen BSA, BSB und diesen jeweils individuell zugeordneten Zugriffssteuerungen ZSA, ZSB,

Fig. 2 zeigt ein Ausführungsbeispiel für eine Weiterbildung der Erfindung, bei der mehrere Datenbanken D1 ...Dm mit jeweils ihnen zugeordneten Gruppen von Datenbankrechnern und zumindest ein allen Datenbankrechnern übergeordneter zentraler Datenbankrechner DBü vorgesehen sind.

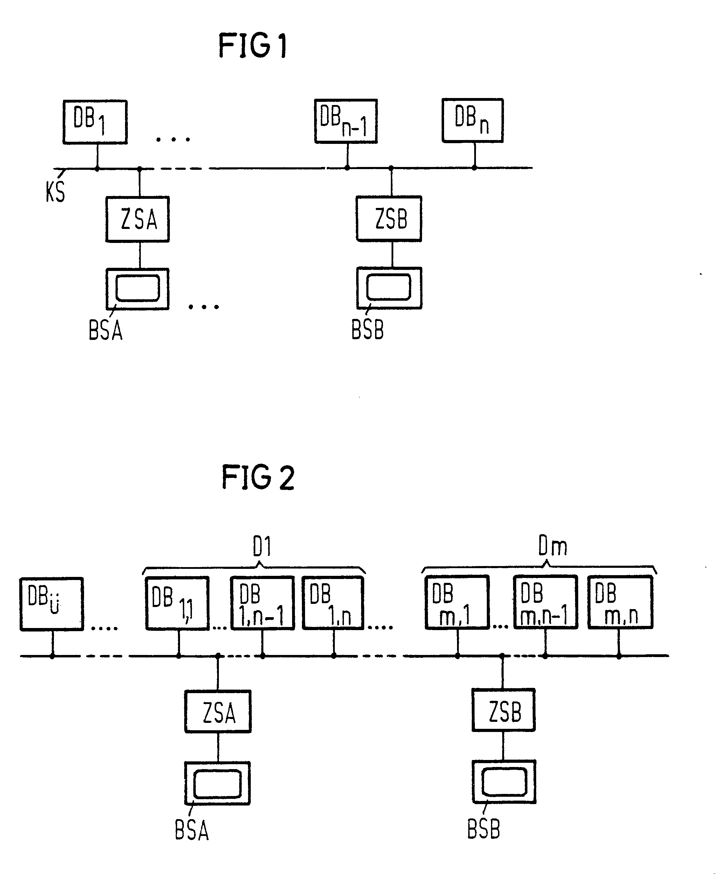

Wie bereits erwähnt, zeigt Fig. 1 ein Ausführungsbeispiel für das erfindungsgemäße Datenbank-System mit einem Kommunikationssystem KS, mehreren Datenbankrechnern DB1...DBn, mehreren Bedienungsstationen BSA, BSB und diesen jeweils individuell zugeordneten Zugriffssteuerungen ZSA, ZSB. Diese gezeigte Hardware-Anordnung eröffnet die Möglichkeit, die Bearbeitung von Datenbankzugriffen für mehrere Benutzer zeitparallel durchzuführen, womit die Leistungsfähigkeit der betreffenden Datenbank erhöht wird und einen Echtzeitbetrieb störende Wartezeiten vermieden werden. Die Anordnung besteht aus einem System aus mehreren Kleinrechnern, vorzugsweise Mikrocomputern, an das in der gezeigten Weise die Bedienungsstationen der Benutzer angeschlossen sind. Die Verbindung dieser Bedienungsstationen BSA, BSB wird über ihnen jeweils individuell zugeordnete Zugriffssteuerungen ZSA bzw. ZSB und das Kommunikationssystem KS vorgenommen. Die Datenbankrechner DB1...DBn bilden in ihrer Gesamtheit die eigentliche Datenbank. Jeder dieser Rechner bearbeitet nur eine bestimmte Funktion bzw. einen bestimmten Funktionsbereich des Datenbank-Systems. Die einem Rechner zugeordneten Funktionen können z.B. sein: Plausibilitätsprüfung, Synonym-Auswertung, Führung der Indexliste einer bestimmten Zugriffstufe, eigentlicher Zugriff zum Datensatz u.a.m.. Den Bedienungsstationen BSA, BSB sind die Zugriffssteuerungen ZSA, ZSB fest, im Zusammenhang mit den Bedienungsstationen auch als sog. intelligente Terminals bezeichenbar, zugeordnet. Sie steuern den Ablauf der einzelnen anstehenden Zugriffsanforderungen. Das gezeigte Ausführungsbeispiel sieht vor, daß das Kommunikationssystem KS als an sich bekanntes·Busleitungssystem ausgeführt ist, für das die Zugriffssteuerungen individuelle Vielfach-Belegungsprüfschaltungen und die Datenbankrechner jeweils individuell programmierte Adreßdecoder haben, mittels derer individuelle Datenbankrechner gezielt von der jeweils betreffenden Zugriffssteuerung aufrufbar sind. Das das Kommunikationssystem in diesem Ausführungsbeispiel bildende Busleitungssystem hat zumindest eine der Anzahl der Zugriffssteuerungen gleiche Anzahl von Datenübertragungskanälen, wobei jeder dieser Kanäle jede Zugriffssteuerung mit jedem Datenbankrechner verbinden kann. Gemäß einer Weiterbildung der Erfindung kann das Kommunikationssystem auch als an sich aus der Vermittlungstechnik bekanntes Koppelfeld, das ein sog. vollkommenes Bündel darstellt, ausgeführt sein. In Datenbank-Systemen, bei denen eine Simultanabwicklung mehrerer Zugriffsanforderungen für ein und dieselbe Funktion oder ein und denselben Funktionsbereich vorgenommen werden muß, ist die in Fig. 2 gezeigte, ein Ausführungsbeispiel für eine Weiterbildung der Erfindung betreffende Anordnung eines Daten-

VPA 78 P 7 1 2 8

bank-Systems vorteilhaft anwendbar. Es sind mehrere Datenbänke D1...Dm vorgesehen, die jeweils eine Gruppe von Datenbankrechnern DB1, 1...DB1, n-1, DB1, n bzw. DBm, 1...DBm, n-1, DBm, n enthalten, wobei jeweils Rechner mit vergleichbaren Indizes aus den verschiedenen Datenbanken gleiche Funktionen oder Funktionsbereiche abdecken. Es können demnach zeitparallel mehrere Zugriffsanforderungen für gleiche Funktionen von verschiedenen Benutzern abgewickelt werden. Ein, ggf. mehrere allen Datenbankrechnern übergeordnete zentrale Rechner DBü, die ebenfalls an das Kommunikationssystem angeschlossen sind, steuern dabei die für einen solchen Simultanbetrieb erforderlichen Wegesuchvorgänge.

4 Patentansprüche
2 Figuren

<u>Patentansprüche</u>                          VPA 78 P 7 1 2 8

1. Datenbank-System für im Echtzeitbetrieb arbeitende Datenverarbeitungsanlagen, dadurch  g e k e n n - z e i c h n e t  , daß mehrere, vorzugsweise mit Mikroprozessoren aufgebaute Datenbankrechner (DB1...DBn-1, DBn) vorgesehen sind, die über ein Kommunikationssystem (KS) gleichberechtigt von Bedienungsstationen (BSA, BSB) mittels diesen individuell zugeordneten Zugriffssteuerungen (ZSA bzw. ZSB) belegbar sind, und daß jedem Datenbankrechner (DB1...DBn-1, DBn) ein eigener Funktionsbereich des Datenbank-Systems zugeordnet ist, so daß mehrere Zugriffsanforderungen für unterschiedliche Funktionsbereiche zeitparallel abwickelbar sind.

2. Datenbank-System nach Anspruch 1, dadurch  g e - k e n n z e i c h n e t  , daß mehrere Datenbanken (D1...Dm) vorgesehen sind, die ihrerseits aus mehreren in jeweils einer Gruppe zusammengefaßten Datenbankrechnern (DB1,1...DB1, n-1, DB1,n bzw. DBm, 1...DBm, n-1, DBm,n) bestehen, die über das Kommunikationssystem (KS) gleichberechtigt von Bedienungsstationen (BSA, BSB) mittels diesen individuell zugeordneten Zugriffssteuerungen (ZSA bzw. ZSB) belegbar sind, daß den Datenbankrechnern (DB1, 1...DB1, n-1, DB1, n bzw. DBm, 1...DBm, n-1, DBm, n) der Datenbanken (D1...Dm) jeweils eigene Funktionsbereiche des Datenbank-Systems zugeordnet sind und daß zumindest ein allen Datenbankrechnern (DB...) die erforderliche Wegesuche für zeitlich zusammenfallende Zugriffsanforderungen ausführender zentraler Datenbankrechner (DBü) übergeordnet ist.

0009113

VPA 78 P 7 1 2 8

3. Datenbank-System nach Anspruch 1 oder 2, dadurch
g e k e n n z e i c h n e t   , daß das Kommunikationssystem (KS) als an sich bekanntes Busleitungssystem
ausgeführt ist, daß die Zugriffssteuerungen (ZSA, ZSB)
an sich aus der Vermittlungstechnik bekannte Vielfach-
Belegungsprüfschaltungen haben, daß die Datenbankrechner (DB...) jeweils individuell programmierte,
ebenfalls an sich bekannte Adreßdecoder haben, mittels
derer individuelle Datenbankrechner (DB...) gezielt
von der Zugriffssteuerung (ZSA, ZSB) aufrufbar sind und
daß das Busleitungssystem zumindest eine der Anzahl der
Zugriffssteuerungen (ZSA, ZSB) gleiche Anzahl von
Datenübertragungskanälen hat.

4. Datenbank-System nach Anspruch 1 oder 2, dadurch
g e k e n n z e i c h n e t   , daß das Kommunikationssystem (KS) als an sich bekanntes Koppelfeld ausgeführt
ist.

**FIG 1**

**FIG 2**